# EUROPEAN PATENT SPECIFICATION

(11) **EP 3 422 604 B1**
(45) Date of publication and mention of the grant of the patent: **04.03.2020**
(21) Application number: 17179046.2
(22) Date of filing: 30.06.2017
(51) Int. Cl.: H04B 10/116

(54) **A SYSTEM OF VISIBLE LIGHT COMMUNICATION FOR A MASS TRANSIT VEHICLE**
SYSTEM FÜR SICHTBARE LICHTKOMMUNIKATION FÜR EIN MASSENVERKEHRSMITTEL
SYSTÈME DE COMMUNICATION DE LUMIÈRE VISIBLE POUR UN VÉHICULE DE TRANSPORT COLLECTIF

(43) Date of publication of application: 02.01.2019
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: GÜLBAHAR, Burhan, 34794 Çekmeköy/Istanbul (TR); MEMISOGLU, Gorkem, 45030 Manisa (TR)
(74) Representative: Ascherl, Andreas

(56) References cited:
- EP-A1- 1 724 952
- EP-A1- 2 056 492
- WO-A1-2014/195431
- SHINICHIRO HARUYAMA ET AL: "New ground-to-train high-speed free-space optical communication system with fast handover mechanism", 2011 OPTICAL FIBER COMMUNICATION CONFERENCE AND EXPOSITION AND THE NATIONAL FIBER OPTIC ENGINEERS CONFERENCE (OFC/NFOEC 2011) : LOS ANGELES, CALIFORNIA, USA, 6 - 10 MARCH 2011, IEEE, PISCATAWAY, NJ, USA, 6 March 2011 (2011-03-06), pages 1-3, XP031946727, ISBN: 978-1-4577-0213-6
- PAUDEL RUPAK ET AL: "Modelling of free space optical link for ground-to-train communications using a Gaussian source", IET OPTOELECTRO, THE INSTITUTION OF ENGINEERING AND TECHNOLOGY, MICHAEL FARADAY HOUSE, SIX HILLS WAY, STEVENAGE, HERTS. SG1 2AY, UK, vol. 7, no. 1, 1 February 2013 (2013-02-01), pages 1-8, XP006043925, ISSN: 1751-8768, DOI: 10.1049/IET-OPT.2012.0047

## Description

This invention refers to a system of visible light communication for a mass transit vehicle, according to claim 1.

### Background of the Invention

In today's time, when huge chunk of information is required to be shared between the devices, high speed communication and connection is need of the hour. The need of high speed communication is furthered when people are in transit. During transit, current communication technology always has fading of data signals.

Chinese Patent Publication number CN101980458 discloses a mobile communication system such as a train and an airplane in a high-speed mobile environment, and more particularly to a high-speed train wireless communication device and method, belonging to the field of wireless information transmission. In the communication method proposed by the invention, the relay station is arranged on the high-speed train, and the channel propagation environment between each user and the relay station is relatively static or slow to support the higher data rate transmission. The high-speed communication between the relay station and the base station is a high-speed mobile channel between the relay station and the base station, and the transmission mode between the relay station and the base station can be optimized.

US Patent Publication number US7242965 discloses a wireless communication system includes a fixed base transceiver station that includes a fixed base station number and a fixed broadcast control channel (BCCH) allocation list and broadcasts a fixed BCCH covering a first range; and a first base transceiver station that includes a first number and a first BCCH allocation list. When the first base transceiver station moves into the first range, the first number is stored into the fixed BCCH allocation list and the fixed base station number is stored into the first BCCH allocation list.

US Patent Publication number US20110230197 discloses a wireless communication system and apparatus for ground to high speed train communication. The proposed system exploits the train time table, train operating scenarios and GSM-R timing provision so that the train-presence triggered broadband wireless communication can be realized with better performance and less cost.

Chinese Patent Publication number CN105966423 discloses a high-speed train Internet system based on a visible light communication technology which is arranged in at least one compartment and includes an upstream optical transceiver, a downstream optical transceiver, a cable network and a wireless router, wherein the upstream optical transceiver and the downstream optical transceiver are respectively installed in Each of the two ends of the vehicle; the upstream optical transceiver and the downstream optical transceiver in the same compartment are connected through the cable network; the upstream optical transceiver of the upper section and the downstream optical transceiver of the next section are connected with optical signals to transmit the information And the wireless router is connected to the cable network. The high-speed train Internet system of the invention based on the visible light communication technology realizes the high-speed information transmission between the cars through the transmission and reception of the optical signal.

Document EP 2 056 492 A1 discloses a mobile communication system for communication with a train that uses leaky optical fibres with light receiver at the track and light receivers on the train. Document WO 2014 / 195 431 A1 discloses a system for continuous communication between an infrastructure and a mobile entity with optical transponders. Document EP 1 724 952 A1 discloses a communication system with a leaking optical fibre and a respective receiver.

The above said prior art, and current communication system has following shortfalls:
- Large-scale and nonstationary small-scale fading
- High speed of mass transit vehicles exceeding 250 km/h results in problems such as fast handover,
- Fast environment change, and large Doppler spreads
- High penetration losses, limited visibility in tunnels, and the harsh electromagnetic
- environment
- Longterm evolution-Railway (LTE-R) utilizes mobile units inside the train for connecting to base stations which results in spotty coverage, high penetration losses of wireless signals
- Traveling through the metal carriages, fast changing channels resulting in high signalling
- Overhead, high possibility of drop calls and handover failure
- There is an imbalance between uplink and downlink in RF systems
- Even 5G can provide 10 Gbit/s rates for several users in a train which is much lower compared with the number of users in the train.
- Providing such high data rates are costly

### Object of the Invention

It is therefore the object of the present invention to provide a technique for establishing a high speed data communication for a mass transit vehicle which is running on track.

### Description of the Invention

The before mentioned object is solved by a system of visible light communication for a mass transit vehicle, according to claim 1.

The system of visible light communication helps in solving the problem of high speed communication while being in transit in mass transit vehicle, as visible light communication helps in qualitative communication channel establishment with high bandwidth into or out of the mass transit vehicle.

Further preferred embodiments are subject-matter of dependent claims and/or of the following specification parts.

According to a preferred embodiment of the system, the system comprising a first series of light sources and a first series of photodetectors placed on the base of the mass transit vehicle or in proximity to the base of the mass transit vehicle, and a second series of light sources and a second series of photodetectors placed on the track or in proximity to the track, wherein the first series of light sources is adapted to establish a first one-to-one visible light communication channel with the second series of photodetectors to communicate data out of the mass transit vehicle, and the second series of light sources is adapted to establish a second one-to-one visible light communication channel with the first series of photodetectors to communicate data into the mass transit vehicle.

This embodiment is beneficial as it provides for bidirectional communication out of the mass transit vehicle, and into the mass transit vehicle.

According to a further embodiment of the system, wherein the first series of light sources is placed in interspacing fashion between the first series of photodetectors.

This embodiment is helpful, as it provided for an efficient way to design the communication infrastructure for the mass transit vehicle.

According to another embodiment of the system, wherein the second series of light sources is placed in interspacing fashion between the second series of photodetectors.

This embodiment is helpful, as it provided for an efficient way to design the communication infrastructure for the track on which the mass transit vehicle runs.

According to a further preferred embodiment of the system, wherein the series of light sources is placed in equal inter-distance symmetrically with respect to each other, and the series of photodetectors are placed in equal inter-distance symmetrically with respect to each other.

This embodiment is beneficial, as symmetric placement provides for efficient and continuous communication speed between the mass transit vehicle and the track.

According to a further embodiment of the system, wherein the mass transit vehicle is train and the track is a pair of rail, such that atleast one of the series of light sources or the series photodetectors are placed between the pair of rail.

This embodiment is beneficial, as it provides an efficient implementation of the invention onto a railway network, by placing the communication infrastructure on train, as well as rails on which train runs.

According to another embodiment of the system, the system comprising the series of an array of light source placed either on the base of the mass transit vehicle, or in proximity of the base of the mass transit vehicle, or on the track, or in proximity of the track, and the series of an array of photodetectors placed either on the base of the mass transit vehicle, or in proximity of the base of the mass transit vehicle, or on the track, or in proximity of the track, wherein number of light sources in the array are equal to number of photodetectors in the array, such that to establish an array of one-to-one visible light communication channels between the light sources of the array of light sources, and the photodetectors of the array of photodetectors.

This embodiment is beneficial, as it further enhances bandwidth of the communication for the mass transit vehicle. The array of light source and photodetectors substantially increases communication channel established for the mass transit vehicle at a given time stamp. Increase in communication channels result in increase in bandwidth for communication.

According to a further preferred embodiment of the system, wherein the light source is inserted into bottom of a first box and the photodetector is inserted into bottom of the second box, wherein when the first box is in line of sight of the second box, the bottom of the first box in which the light source is inserted is farthest to the bottom of the second box in which the photodetector is inserted.

This embodiment is beneficial, as it reduces interference between the light source and the photo detectors which are not in direct line of sight to each other. Hence, this embodiment increases quality of communication channel established.

According to a further embodiment of the system, wherein the light source is light emitting diode.

This embodiment is beneficial, as it provides for efficient and fast modulation of the data to the light source, hence establishing faster communication channel for data transfer. As light emitting diode are semiconductor based, hence they can be easily handled for fast switching on and off of the light for encoding data to be sent through light, which result in fast communication.

According to another embodiment of the system, wherein the light source and the photodetector are adapted to establish color coded visual light communication channel.

This embodiment is beneficial, as it provides for a substantial degree of freedom for visible light communication. Various known techniques can be used for color coding, such as color shift keying, color intensity modulation, or metameric modulation, or any other known color coding scheme which can be applied to visible light communication.

According to a further embodiment of the system, wherein the light source and the photodetector are adapted to establish intensity modulated visual light communication channel.

This embodiment is beneficial, as it provides for another way to provide efficiency in visible light communication by coding data through modulating the intensity of light.

According to a further embodiment of the system, the system comprising a velocity acceleration estimation unit adapted to estimate velocity of the mass transit vehicle and to synchronize the data transmission between the light source and the photodetector.

This embodiment is beneficial, as the velocity acceleration estimation unit helps in synchronizing the data transmission between the track and the mass transit vehicle, which results in quality communication, with least loss of data.

According to a further embodiment of the system, wherein the velocity acceleration estimation unit comprises a vehicle velocity acceleration estimation module placed on the vehicle and a track velocity acceleration estimation unit placed on the track or in proximity to the track, wherein the vehicle velocity acceleration estimation module and the track velocity acceleration estimation module cooperate together or functions individually to estimate the velocity of the mass transit vehicle.

This embodiment is beneficial, as the presence of velocity acceleration estimation module at both the vehicle and the track helps in better estimation of the vehicle velocity, and accordingly better synchronize the data transmission between the vehicle and the track.

According to a further embodiment of the system, the system comprising a modulator adapted to modulate light with the data and to further transfer the light to the light source for emitting the modulated light, and a demodulator adapted to receive the modulated light from the photodetector, and to demodulate the light and to extract data for further communication.

This embodiment is helpful, as it provides for modulating the light with a mechanism desired by the user of the communication system, which shall be difficult to program, if the modulator and demodulator shall be part of the light source and the photodetector respectively.

According to a further embodiment of the system, wherein the photodetectors are adapted detect only light with specific color or only white light.

This embodiment is helpful, as the photodetectors can detect only the relevant color and disregard any other color, thus brings efficiency and quality in the data communication.

Further benefits, goals and features of the present invention will be described by the following specification of the attached figures, in which components of the invention are exemplarily illustrated. Components of the devices and method according to the inventions, which match at least essentially with respect to their function, can be marked with the same reference sign, wherein such components do not have to be marked or described in all figures.

The invention is just exemplarily described with respect to the attached figure in the following.

### Brief Description of the Drawings

Fig. 1 shows a schematic diagram of the system of visible light communication for a mass transit vehicle.
Fig. 2 shows communication channel established between array of photodetectors and array of light source.
Fig. 3 shows the light source and the photodetector in line of sight and being inserted in boxes.
Fig 4. Is a block diagram of the system of visible light communication for a mass transit vehicle.

### Detailed Description of the Drawings

The present invention provides an ultra-high data rate (Tbit/s) communications to high speed trains for both uplink and downlink, by utilizing a networking infrastructure with visible light communications without any detrimental effects of RF radiation and with significantly low cost.

While describing the figures, the references may be made to the elements present in other figures.

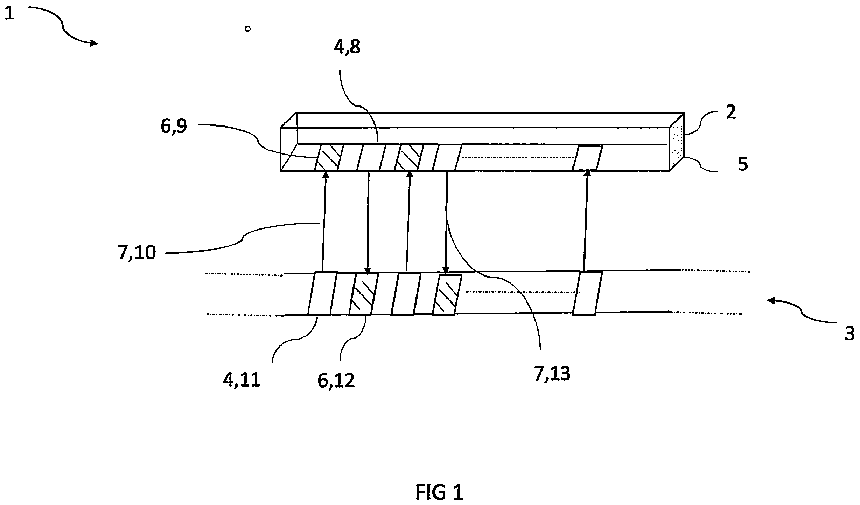

Fig. 1 shows a schematic diagram of the system 1 of visible light communication for a mass transit vehicle 2 which is running on track 3. The mass transit vehicle 2 is a train and the track 3 is pair of rails, the train is running on the pair of rails. The mass transit vehicle 2 is provided with a first series 8 of light sources 4 placed in interspacing fashion between a first series 9 of photodetectors 6, such that the light sources 4 are placed alternatively in between the photodetectors 6. The track 3 is provided with a second series 11 of light sources 4 placed in interspacing fashion between a second series 12 of photodetectors 6, such that the light sources 4 are placed alternatively in between the photodetectors 6 between the par of rails 3. In an alternate embodiment, for two-way communication, the above-said interspacing pattern may not be followed, rather there can be another arrangement where one photodetector 6 is placed after every two light sources 4 on the track 3, and one light source 4 is placed after every two photodetectors 6 on the base 5 of the track 3. However, this provides different bandwidth for uplink and downlink on the railway network. As desired, the communication infrastructure can be optimized to achieve a particular speed and quality of communication.

The communication is established between the light sources 4 of the first series 8 and the photodetectors 6 of the second series 12, and between the light sources 4 of the second series 11 and the photodetectors 6 of the first series 9. When the light sources 4 are in line of sight of sight of the photodetectors 6, a one-to-one communication channel 7 is established from the light source 4 to the photodetectors 6. Over this one-to-one communication channel 7, a modulated or coded light is transmitted which is captured by the photodetectors 6 where it is decoded or demodulated to further communicate the data through other communication medium and protocol. When the light sources 4 of the first series 8 and the photodetectors 6 of the second series 12 are in line of sight to each other a first one-to-one communication channel 13 is established between them, and the data is transmitted out of the mass transit vehicle 2. When the light sources 4 of the second series 11 and the photodetectors 6 of the first series 9 are in line of sight to each other a second one-to-one communication channel 10 is established between them, and the data is transmitted into of the mass transit vehicle 2.

The first series 8 of light source 4 and the first series 9 of photodetectors 6 are placed on the base 5 of the mass transit vehicle 2, outside of the mass transit vehicle 2 facing the track 3. In one embodiment, the first series 8 of light source 4 and the first series 9 of photodetectors 6 need not be placed on the base 5, but in proximity of the base 5, however in such a way, so that a line of sight can be maintained to the second series 11 of light source 4 and the second series 12 of photodetectors 6. In one embodiment, where the base 5 of the mass transit vehicle 2 is transparent, the first series 8 of light source 4 and the first series 9 of photodetectors 6 can also be placed on the base 5 of the mass transit vehicle 2, however inside of the mass transit vehicle 2.

The second series 11 of light source 4 and the second series 9 of photodetectors 6 are placed on the track 3. However, in one embodiment, the second series 11 of light source 4 and the second series 12 of photodetectors 6 can be placed in proximity to the track, however in such way that the line of sight is maintained with the first series 8 of light source 4 and the first series 9 of photodetectors 6.

In one embodiment, the light sources 4 in the series 8, 11 of light sources 4 are placed in equal inter-distance symmetrically with respect to each other, and the photodetectors 6 in the series 9, 12 of photodetectors 6 are placed in equal inter-distance symmetrically with respect to each other. This further helps in improving the quality of communication on railway network.

In one embodiment, there is only one-way communication between the mass transit vehicle 2 and the track 3, and there is either the photodetectors 6 or the light sources 4 placed on the mass transit vehicle 2. And, if the mass transit vehicle 2 is provided with light sources 4, then the track 3 is provided with the photodetectors 6. And, if the mass transit vehicle 2 is provided with photodetectors 6, then the track 3 is provided with the light sources 4.

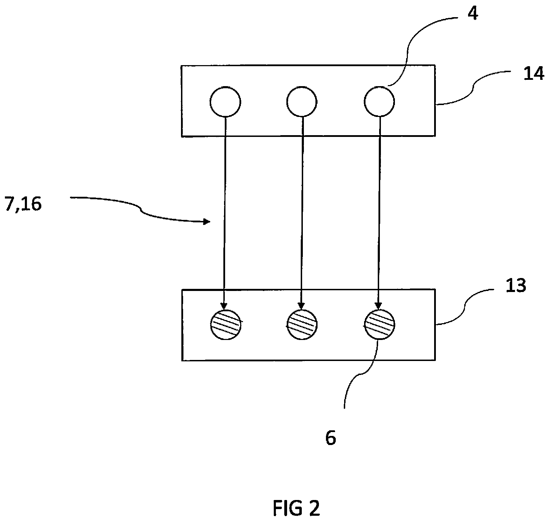

As shown in Fig. 2, in spite single light source 4 at a particular point, an array 14 of light source 4 can be provided at a particular point or location in the mass transit vehicle 2. Similarly, in spite single photodetector 6 at a particular point, an array 13 of photodetectors 6 can be provided at a particular point or location onto the track 3. Hence, the communication infrastructure between the mass transit vehicle 2 and the track 3 is established by providing a first series 8 of array 14 of light source 4 on the base 5 of the mass transit vehicle 2, and a first series 9 of array 13 of the photodetectors 6 onto the base 5 of the mass transit vehicle 2, and second series 11 of array 14 of light source 4 on the track 3, and a second series 12 of array 13 of the photodetectors 6 onto the track 3. The array 13, 14 helps to numerically enhance establishment of one-to-one communication channel 7 between the mass transit vehicle 2 and the track 3.

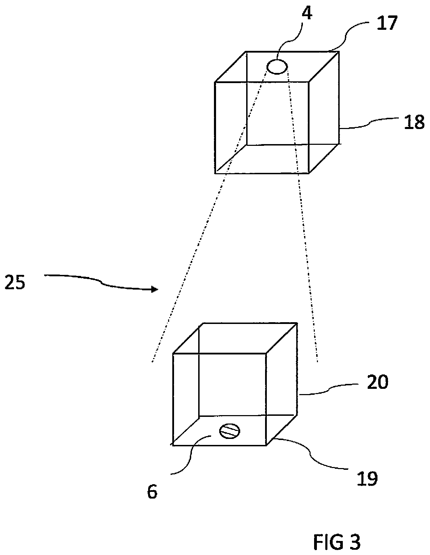

Fig. 3 shows the placement of the light source 4 and the photodetectors 6, such that a field of view 25 is limited between the light source 4 and the mass transit vehicle 2. The light source 4 is inserted into bottom 17 of a first box 18 and the photodetector 6 is inserted into bottom 19 of a second box 20. When the first box 18 is in line of sight of the second box 18, the bottom 17 of the first box 18 in which the light source 4 is inserted is farthest to the bottom 19 of the second box 20 in which the photodetector 6 is inserted. In this arrangement, due to the side walls of the boxes 18, 20, the field of view between the light source 4 and the photodetector is reduced and kept limited 25, which helps in reduction of interference of light waves which are not in direct sight of the photodetectors 6. The limitations of the field of view 25 can be varied by changing height of the walls of the boxes 18, 20, which are being extended from the bottom 17, 19. The limitations of the field of view 25 can also be varied by changing dimensions of the bottoms 17, 19 of the boxes 18, 20. For better synchronization of data communication between the photodetectors 6 and the light source 4, the dimensions of the boxes 18, 20 should be similar.

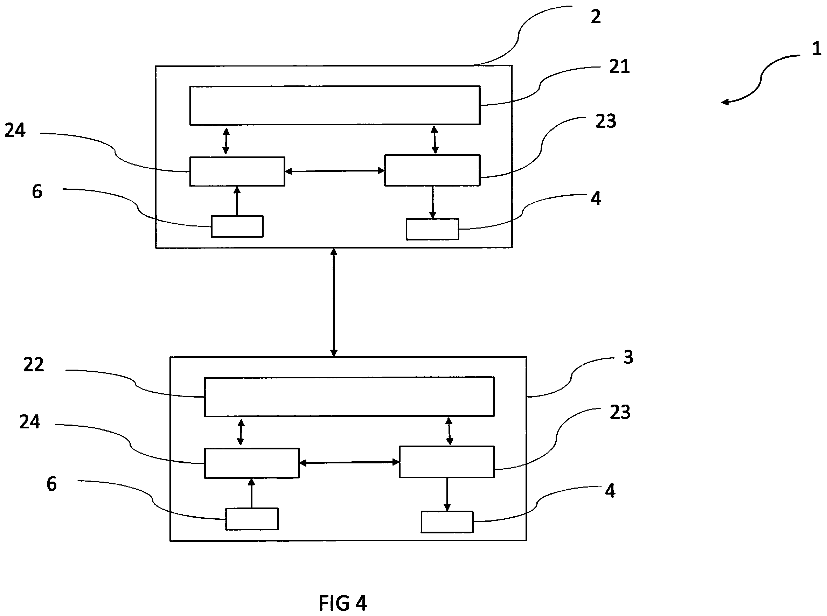

Fig. 4 shows a block diagram of the system 1 of visible light communication for a mass transit vehicle 2. The system 1 is implemented over a transit network of the mass transit vehicle 2 and the track 3. The mass transit includes a light source 4, as well as a photodetector 6. Also, the track is provided with light source 4, as well as a photodetector 6. The light source 4 of the mass transit vehicle 2 emits modulated light, while the photodetector 6 of the track 3 receives the modulated light. And, the light source 4 of the track 3 emits modulated light, while the photodetector 6 of the mass transit vehicle 2 receives the modulated light. For modulating the light, both the mass transit vehicle 2 and the track 3 are provided with modulators 23. For demodulating the light, both the mass transit vehicle 2 and the track 3 are provided with demodulators 24. The modulators 23 works in cooperation with the light source 4, and modulate the light with data to be transmitted and thereafter transmit the light through the light source 4. When the light is received by the photodetectors 6, it is demodulated with the help of demodulators 24 to extract the data to be further transmitted. There are bidirectional one-to-one communication channels 7, 10, 13 established which helps to transmit the data into the mass transit vehicle 2 and out of the mass transit vehicle 2.

The system 1 is also provided with a velocity acceleration estimation unit 21, 22 which estimates velocity of the mass transit vehicle 2 and facilitate in synchronizing the data transmission between the light source 4 and the photodetector 6. Based on the velocity of the mass transit vehicle 2 estimated, the velocity acceleration estimation unit 21, 22 coordinated with the modulator 23 and demodulator 24 for synchronizing the data transmission. The velocity acceleration estimation unit 21, 22 has two modules, i.e., a vehicle velocity acceleration estimation module 21 placed on the mass transit vehicle 2 and a track velocity acceleration estimation module 22 placed on the track 3 or in proximity to the track 3. The vehicle velocity acceleration estimation module 21 and the track velocity acceleration estimation module 22 cooperate together or individually estimates the velocity of the mass transit vehicle 2. Based on the velocity of the mass transit vehicle 2 estimated, the vehicle velocity acceleration estimation module 21 coordinates with the modulator 23 and demodulator 24 placed on the mass transit vehicle 2, and the track velocity acceleration estimation module 22 coordinates with the modulator 23 and demodulator 24 placed on the track 3 for synchronizing the data transmission. In one embodiment, there is no separate velocity acceleration estimation modules 21, 22 are required, rather there can be one velocity acceleration estimation module, which can be either placed in proximity or on track 3, or in proximity or on the mass transit vehicle 2, and coordinates further modulators 23 and demodulators 24 of both the mass transit vehicle 2 and the track 3 for synchronizing data transmission.

In one embodiment, the light source 4 is light emitting diodes (LEDs), which can be easily programmed for switching off and switching on at a very high speed and in a qualitative fashion, as they are semiconductor based, and can be easily programmed. This support for high speed and quality communication while being on transit.

The light source 4 and the photodetectors 6 can be programmed in such a way, so that either color coded communication or intensity modulated communication can be established onto the one-to-one communication channel 7 is established between the light source 4 and the photo detector 6.

In one embodiment, the photodetector 6 is programmed to detect only light with specific color or only white light.

The invention is best explained with below-said example. For example, if a train has length of 111 meters and its velocity is 400 km/h, then at each second it travels 111 meters, as much as its length. Assume that the photodetector and the LED arrays are equally distributed through the length of the train and the rails, and there are in total of N photodetectors and N LED arrays on the train. Then, at each second, N LED arrays pass on top of each photodetectors on the railway through the length of the train. If each LED blinks or operates at N MHz, then each LED on the train sends another intensity or color pulse to each one of N photodetectors under the train while the train moves. In a sense, as the pulse changes in LED, it encounters another photodetector under the train and on the rails. Therefore, it spreads all the N pulses to N different photodetectors on the rails. If we assume that, each photodetector on the rails gets another data from each different N LED on the train, then it is possible to create a channel which transmits N^2 symbols at each second, by utilizing all the LEDs on the train. The same calculation is valid for the reverse channel, i.e., from the railway to the train. Then, it is possible to obtain a channel with N^2 symbols/second. In the worst case, without any color coded visible light communications, but only with intensity modulated visible light communications, it should result in N^2 bits/second. If color coded or more improved constellations are allowed, it could significantly increase the data rates. The commercially available LEDs allow N < 10^7 Hz. Therefore, even with N = 10^6, a downlink and uplink channel of 10^12 symbols/second can be provides, which is 1 Tera symbol for each second significantly higher than even future fifth generation (5G) standards. If 3 bits/s/Hz efficiency is obtained, then 3 Tbit/s downlink and uplink channel can be provided which is not possible with 5G. For N = 10^6 and a classical train length 111 meter, it corresponds to LED and photodetectors sizes less than 111/10^6 = 0.1 millimeter.

The technology of current invention has application in any mass transit vehicle which is running on track, like high speed trains, mass rapid transit system, light rail transit system, on road travelling vehicles like buses, etc.

In summary, a system 1 of visible light communication for a mass transit vehicle 2 is disclosed, wherein the mass transit vehicle 2 is adapted to run on a track 3, the system comprising a series of light sources 4 placed either on a base 5 of the mass transit vehicle 2, or in proximity of the base 5 of the mass transit vehicle 2, or on the track 3, or in proximity of the track 3, and a series of photodetectors 6 placed either on the base 5 of the mass transit vehicle 2, or in proximity of the base 5 of the mass transit vehicle 2, or on the track 3, or in proximity of the track 3, wherein each of the light source 4 is adapted to establish one-to-one visible light communication channel 7 with each of the photodetectors 6 at a time stamp, such that a data being carried by light from the light sources 4 at the time stamp is transferred to the photodetectors 6 for further communication of data either into the mass transit vehicle (2) or out of the mass transit vehicle 2.

### List of reference numbers

- 1: system of visible light communication
- 2: mass transit vehicle
- 3: track
- 4: light source
- 5: base of the mass transit vehicle
- 6: photodetector
- 7: one-to-one visible le light communication channel
- 8: first series of light sources
- 9: first series of photodetectors
- 10: second one-to-one visible communication channel
- 11: second series of light sources
- 12: second series of photodetectors
- 13: first one-to-one visible light communication channel
- 14: array of light sources
- 15: array of photodetectors
- 16: array of one-to-one visible light communication channels
- 17: bottom of first box
- 18: first box
- 19: bottom of second box
- 20: second box
- 21: vehicle velocity acceleration estimation module
- 22: track velocity acceleration estimation module
- 23: modulator
- 24: demodulator
- 25: Field of view

## Claims

1. A system (1) of visible light communication for a mass transit vehicle (2), wherein the mass transit vehicle (2) is adapted to run on a track (3), the system comprising:
- a first series of visible light sources (4) placed either on a base (5) of the mass transit vehicle (2), or in proximity of the base (5) of the mass transit vehicle (2), or on the track (3), or in proximity of the track (3); and
- a first series of photodetectors (6) placed either on the base (5) of the mass transit vehicle (2), or in proximity of the base (5) of the mass transit vehicle (2), or on the track (3), or in proximity of the track (3),
wherein each of the light sources (4) is adapted to establish one-to-one visible light communication channel (7) with each of the photodetectors (6) at a time stamp, such that data being carried by light from the light sources (4) at the time stamp is transferred to the photodetectors (6) for further communication of data either into the mass transit vehicle (2) or out of the mass transit vehicle (2);
**characterized by** further comprising a velocity acceleration estimation unit adapted to estimate velocity of the mass transit vehicle (2) and to synchronize the data transmission between the light source (4) and the photodetector (6) according to the estimated velocity, wherein the velocity acceleration estimation unit comprising a vehicle velocity acceleration estimation module (21) placed on the mass transit vehicle (2) and a track velocity acceleration estimation module (22) placed on the track (3) or in proximity to the track (3), wherein the vehicle velocity acceleration estimation module (21) and the track velocity acceleration estimation module (22) are adapted to cooperate together or function individually to estimate the velocity of the mass transit vehicle (2).

2. The system (1) according to claim 1, wherein the first series (8) of light sources (4) and the first series (9) of photodetectors (6) are placed on the base (5) of the mass transit vehicle (2) or in proximity to the base (5) of the mass transit vehicle (2); the system further comprising
- a second series (11) of visible light sources (4) and a second series (12) of photodetectors (6) placed on the track (3) or in proximity to the track (3),
wherein the first series (8) of light sources (6) is adapted to establish a first one-to-one visible light communication channel (13, 7) with the second series (12) of photodetectors (6) to communicate data out of the mass transit vehicle (2), and the second series (11) of light sources (4) is adapted to establish a second one-to-one visible light communication channel (10, 7) with the first series (9) of photodetectors (6) to communicate data into the mass transit vehicle (2).

3. The system (1) according to claim 2, wherein the first series (8) of light sources (4) is placed in interspacing fashion between the first series (9) of photodetectors (6).

4. The system (1) according to any of the claims 2 or 3, wherein the second series (11) of light sources (4) is placed in interspacing fashion between the second series (12) of photodetectors (6).

5. The system (1) according to any of the claims 3 or 4, wherein the series (8, 11) of light sources (4) is placed in equal inter-distance symmetrically with respect to each other, and the series (9, 12) of photodetectors (6) is placed in equal inter-distance symmetrically with respect to each other.

6. The system (1) according to any of the claims 1 to 5, wherein the mass transit vehicle (2) is a train and the track (3) is a pair of rails, such that at least one of the series (8,11) of light sources (4) or one of the series (9,12) of photodetectors (6) is placed between the pair of rails.

7. The system (1) according to any of the claims 1 to 6 wherein
- the series (8, 11) of light sources (4) is an array (14) of light sources (4) placed either on the base (5) of the mass transit vehicle (2), or in proximity of the base (4) of the mass transit vehicle (2), or on the track (3), or in proximity of the track (3); and
- the series (9, 12) of photodetectors (6) is an array (15) of photodetectors (6) placed either on the base (5) of the mass transit vehicle (2), or in proximity of the base (5) of the mass transit vehicle (2), or on the track (3), or in proximity of the track (3),
wherein the number of light sources (4) in the array (14) is equal to the number of photodetectors (6) in the array (15), such that to establish an array (16) of one-to-one visible light communication channels (7) between the light sources (4) of the array (14) of light sources (4), and the photodetectors (6) of the array (15) of photodetectors (6).

8. The system (1) according to any of the claims 1 to 7, wherein the light source (4) is inserted into a bottom (17) of a first box (18) and the photodetector (6) is inserted into a bottom (19) of a second box (20), wherein when the first box (18) is in line of sight of the second box (18), the bottom (17) of the first box (18) in which the light source (4) is inserted is farthest to the bottom (19) of the second box (20) in which the photodetector (6) is inserted.

9. The system (1) according to any of the claims 1 to 8, wherein the light source (4) is a light emitting diode.

10. The system (1) according to any of the claims 1 to 9, wherein the light source (4) and the photodetector (6) are adapted to establish a color coded visual light communication channel (7).

11. The system (1) according to any of the claims 1 to 9, wherein the light source (4) and the photodetector (6) are adapted to establish an intensity modulated visual light communication channel (7).

12. The system (1) according to any of the claims 1 to 11 comprising:
- a modulator (23) adapted to modulate light with the data and to further transfer the light to the light source (4) for emitting the modulated light;
- a demodulator (24) adapted to receive the modulated light from the photodetector (6), and to demodulate the light and to extract data for further communication.

13. The system (1) according to any of the claims 1 to 12, wherein the photodetector (6) is adapted to detect only light with specific color or only white light.

## Patentansprüche

1. System (1) zur Kommunikation mit sichtbarem Licht für ein Massentransitfahrzeug (2), wobei das Massentransitfahrzeug (2) zum Fahren auf einem Gleis (3) angepasst ist, wobei das System umfasst:
- eine erste Reihe von Quellen (4) für sichtbares Licht, die entweder auf einer Basis (5) des Massentransitfahrzeugs (2) oder in der Nähe der Basis (5) des Massentransitfahrzeugs (2) oder auf dem Gleis (3) oder in der Nähe des Gleises (3) angeordnet sind; und
- eine erste Reihe von Fotodetektoren (6), die entweder auf der Basis (5) des Massentransitfahrzeugs (2) oder in der Nähe der Basis (5) des Massentransitfahrzeugs (2) oder auf dem Gleis (3) oder in der Nähe des Gleises (3) angeordnet sind,
wobei jede der Lichtquellen (4) so angepasst ist, dass sie einen Eins-zu-Eins-Kommunikationskanal (7) für sichtbares Licht mit jedem der Fotodetektoren (6) zu einem Zeitstempel aufbaut, so dass Daten, die durch Licht von den Lichtquellen (4) zu dem Zeitpunkt des Zeitstempels übertragen werden, zu den Fotodetektoren (6) zur weiteren Kommunikation von Daten entweder in das Massentransitfahrzeug (2) oder aus dem Massentransitfahrzeug (2) heraus übertragen werden;
**dadurch gekennzeichnet, dass** es weiterhin umfasst
eine Geschwindigkeitsbeschleunigungs-Schätzeinheit, die geeignet ist, die Geschwindigkeit des Massentransitfahrzeugs (2) zu schätzen und die Datenübertragung zwischen der Lichtquelle (4) und dem Fotodetektor (6) entsprechend der geschätzten Geschwindigkeit zu synchronisieren, wobei die Geschwindigkeitsbeschleunigungs-Schätzeinheit ein auf dem Massentransitfahrzeug (2) angeordnetes Fahrzeuggeschwindigkeits-Beschleunigungs-Schätzmodul (21) und ein auf dem Gleis (3) oder in der Nähe des Gleises (3) angeordnetes Gleisgeschwindigkeits-Beschleunigungs-Schätzmodul (22) umfasst, wobei das Modul (21) zur Schätzung der Fahrzeuggeschwindigkeitsbeschleunigung und das Modul (22) zur Schätzung der Bahngeschwindigkeitsbeschleunigung so angepasst sind, dass sie zusammenwirken oder einzeln funktionieren, um die Geschwindigkeit des Massentransitfahrzeugs (2) zu schätzen.

2. System (1) nach Anspruch 1, wobei die erste Reihe (8) von Lichtquellen (4) und die erste Reihe (9) von Fotodetektoren (6) auf der Basis (5) des Massentransitfahrzeugs (2) oder in der Nähe der Basis (5) des Massentransitfahrzeugs (2) angeordnet sind; wobei das System ferner umfasst
- eine zweite Reihe (11) von sichtbaren Lichtquellen (4) und eine zweite Reihe (12) von Fotodetektoren (6), die auf der Spur (3) oder in der Nähe der Spur (3) angeordnet sind,
wobei die erste Reihe (8) von Lichtquellen (6) angepasst ist, um einen ersten Eins-zu-Eins-Kommunikationskanal (13, 7) für sichtbares Licht mit der zweiten Reihe (12) von Fotodetektoren (6) aufzubauen, um Daten aus dem Massentransitfahrzeug (2) zu übertragen, und die zweite Reihe (11) von Lichtquellen (4) angepasst ist, um einen zweiten Eins-zu-Eins-Kommunikationskanal (10, 7) für sichtbares Licht mit der ersten Reihe (9) von Fotodetektoren (6) aufzubauen, um Daten in das Massentransitfahrzeug (2) zu übertragen.

3. System (1) nach Anspruch 2, bei dem die erste Reihe (8) von Lichtquellen (4) mit Abstand zwischen der ersten Reihe (9) von Fotodetektoren (6) angeordnet ist.

4. System (1) nach einem der Ansprüche 2 oder 3, wobei die zweite Reihe (11) von Lichtquellen (4) mit Abstand zwischen der zweiten Reihe (12) von Fotodetektoren (6) angeordnet ist.

5. System (1) nach einem der Ansprüche 3 oder 4, wobei die Reihen (8, 11) von Lichtquellen (4) in gleichem Abstand symmetrisch zueinander angeordnet sind und die Reihen (9, 12) von Fotodetektoren (6) in gleichem Abstand symmetrisch zueinander angeordnet sind.

6. System (1) nach einem der Ansprüche 1 bis 5, wobei das Massentransitfahrzeug (2) ein Zug ist und das Gleis (3) ein Schienenpaar ist, so dass mindestens eine der Reihen (8, 11) von Lichtquellen (4) oder eine der Reihen (9, 12) von Fotodetektoren (6) zwischen dem Schienenpaar angeordnet ist.

7. Das System (1) nach einem der Ansprüche 1 bis 6, wobei
- die Reihe (8, 11) von Lichtquellen (4) eine Array (14) von Lichtquellen (4) ist, die entweder auf der Basis (5) des Massentransitfahrzeugs (2) oder in der Nähe der Basis (4) des Massentransitfahrzeugs (2) oder auf dem Gleis (3) oder in der Nähe des Gleises (3) angeordnet ist; und
- die Reihe (9, 12) von Fotodetektoren (6) eine Array (15) von Fotodetektoren (6) ist, die entweder auf der Basis (5) des Massentransitfahrzeugs (2) oder in der Nähe der Basis (5) des Massentransitfahrzeugs (2) oder auf dem Gleis (3) oder in der Nähe des Gleises (3) angeordnet ist,
wobei die Anzahl der Lichtquellen (4) in dem Array (14) gleich der Anzahl der Fotodetektoren (6) in dem Array (15) ist, so dass ein Array (16) von Eins-zu-Eins-Kommunikationskanälen (7) für sichtbares Licht zwischen den Lichtquellen (4) des Arrays (14) von Lichtquellen (4) und den Fotodetektoren (6) des Arrays (15) von Fotodetektoren (6) aufgebaut wird.

8. System (1) nach einem der Ansprüche 1 bis 7, wobei die Lichtquelle (4) in einen Boden (17) eines ersten Kastens (18) und der Fotodetektor (6) in einen Boden (19) eines zweiten Kastens (20) eingesetzt ist, wobei, wenn der erste Kasten (18) in der Sichtlinie des zweiten Kastens (18) ist, der Boden (17) des ersten Kastens (18), in den die Lichtquelle (4) eingesetzt ist, am weitesten vom Boden (19) des zweiten Kastens (20) entfernt ist, in den der Fotodetektor (6) eingesetzt ist.

9. System (1) nach einem der Ansprüche 1 bis 8, bei dem die Lichtquelle (4) eine Leuchtdiode ist.

10. Das System (1) nach einem der Ansprüche 1 bis 9, wobei die Lichtquelle (4) und der Fotodetektor (6) so ausgebildet sind, dass sie einen farbcodierten visuellen Lichtkommunikationskanal (7) bilden.

11. Das System (1) nach einem der Ansprüche 1 bis 9, wobei die Lichtquelle (4) und der Fotodetektor (6) so angepasst sind, dass sie einen intensitätsmodulierten visuellen Lichtkommunikationskanal (7) aufbauen.

12. Das System (1) nach einem der Ansprüche 1 bis 11, umfassend:
- einen Modulator (23), der dazu geeignet ist, Licht mit den Daten zu modulieren und das Licht weiter zur Lichtquelle (4) zu übertragen, um das modulierte Licht zu emittieren;
- einen Demodulator (24), der dazu ausgelegt ist, das modulierte Licht von dem Fotodetektor (6) zu empfangen und das Licht zu demodulieren und Daten für die weitere Kommunikation zu extrahieren.

13. System (1) nach einem der Ansprüche 1 bis 12, wobei der Fotodetektor (6) so ausgelegt ist, dass er nur Licht mit einer bestimmten Farbe oder nur weißes Licht erfasst.

## Revendications

1. Système (1) de communication en lumière visible pour un véhicule de transport en commun (2), dans lequel le véhicule de transport en commun (2) est adapté pour rouler sur une voie (3), le système comprenant :
- une première série de sources de lumière visible (4) placées soit sur une base (5) du véhicule de transport en commun (2), soit à proximité de la base (5) du véhicule de transport en commun (2), soit sur la piste (3), soit à proximité de la piste (3) ; et
- une première série de photodétecteurs (6) placés soit sur la base (5) du véhicule de transport en commun (2), soit à proximité de la base (5) du véhicule de transport en commun (2), soit sur la voie (3), soit à proximité de la voie (3),
dans lequel chacune des sources de lumière (4) est adaptée pour établir un canal de communication de lumière visible (7) de un à un avec chacun des photodétecteurs (6) à un moment donné, de sorte que les données transportées par la lumière des sources de lumière (4) au moment donné sont transférées aux photodétecteurs (6) pour une communication ultérieure des données soit dans le véhicule de transport en commun (2) soit hors du véhicule de transport en commun (2) ;
**caractérisé en ce qu'**il comprend en outre
une unité d'estimation de l'accélération de la vitesse adaptée pour estimer la vitesse du véhicule de transport en commun (2) et pour synchroniser la transmission de données entre la source lumineuse (4) et le photodétecteur (6) en fonction de la vitesse estimée, dans laquelle l'unité d'estimation de l'accélération de la vitesse comprend un module d'estimation de l'accélération de la vitesse du véhicule (21) placé sur le véhicule de transport en commun (2) et un module d'estimation de l'accélération de la vitesse de la voie (22) placé sur la voie (3) ou à proximité de la voie (3), dans lequel le module d'estimation de l'accélération de la vitesse du véhicule (21) et le module d'estimation de l'accélération de la vitesse de la voie (22) sont adaptés pour coopérer ensemble ou fonctionner individuellement pour estimer la vitesse du véhicule de transport en commun (2).

2. Système (1) selon la revendication 1, dans lequel la première série (8) de sources lumineuses (4) et la première série (9) de photodétecteurs (6) sont placées sur la base (5) du véhicule de transport en commun (2) ou à proximité de la base (5) du véhicule de transport en commun (2) ; le système comprenant en outre
- une deuxième série (11) de sources de lumière visible (4) et une deuxième série (12) de photodétecteurs (6) placés sur la voie (3) ou à proximité de celle-ci,
dans lequel la première série (8) de sources lumineuses (6) est adaptée pour établir un premier canal de communication de lumière visible un à un (13, 7) avec la deuxième série (12) de photodétecteurs (6) pour communiquer des données à l'extérieur du véhicule de transport en commun (2), et la deuxième série (11) de sources lumineuses (4) est adaptée pour établir un deuxième canal de communication de lumière visible un à un (10, 7) avec la première série (9) de photodétecteurs (6) pour communiquer des données dans le véhicule de transport en commun (2).

3. Système (1) selon la revendication 2, dans lequel la première série (8) de sources lumineuses (4) est placée de manière espacée entre la première série (9) de photodétecteurs (6).

4. Système (1) selon l'une des revendications 2 ou 3, dans lequel la deuxième série (11) de sources lumineuses (4) est placée de manière espacée entre la deuxième série (12) de photodétecteurs (6).

5. Système (1) selon l'une des revendications 3 ou 4, dans lequel la série (8, 11) de sources lumineuses (4) est placée à égale distance les unes des autres de manière symétrique, et la série (9, 12) de photodétecteurs (6) est placée à égale distance les unes des autres de manière symétrique.

6. Système (1) selon l'une des revendications 1 à 5, dans lequel le véhicule de transport en commun (2) est un train et la voie (3) est une paire de rails, de telle sorte qu'au moins une des séries (8, 11) de sources lumineuses (4) ou une des séries (9, 12) de photodétecteurs (6) est placée entre la paire de rails.

7. Le système (1) selon l'une des revendications 1 à 6, dans lequel
- la série (8, 11) de sources lumineuses (4) est un ensemble (14) de sources lumineuses (4) placées soit sur la base (5) du véhicule de transport en commun (2), soit à proximité de la base (4) du véhicule de transport en commun (2), soit sur la voie (3), soit à proximité de la voie (3) ; et
- la série (9, 12) de photodétecteurs (6) est un ensemble (15) de photodétecteurs (6) placés soit sur la base (5) du véhicule de transport en commun (2), soit à proximité de la base (5) du véhicule de transport en commun (2), soit sur la voie (3), soit à proximité de la voie (3),
dans lequel le nombre de sources de lumière (4) dans le réseau (14) est égal au nombre de photodétecteurs (6) dans le réseau (15), de sorte que pour établir un réseau (16) de canaux de communication de lumière visible (7) un à un entre les sources de lumière (4) du réseau (14) de sources de lumière (4), et les photodétecteurs (6) du réseau (15) de photodétecteurs (6).

8. Le système (1) selon l'une des revendications 1 à 7, dans lequel la source de lumière (4) est insérée dans un fond (17) d'une première boîte (18) et le photodétecteur (6) est inséré dans un fond (19) d'une deuxième boîte (20), dans lequel, lorsque la première boîte (18) est en ligne de mire de la seconde boîte (18), le fond (17) de la première boîte (18) dans laquelle la source de lumière (4) est insérée est le plus éloigné du fond (19) de la seconde boîte (20) dans laquelle le photodétecteur (6) est inséré.

9. Le système (1) selon l'une des revendications 1 à 8, dans lequel la source de lumière (4) est une diode électroluminescente.

10. Le système (1) selon l'une des revendications 1 à 9, dans lequel la source de lumière (4) et le photodétecteur (6) sont adaptés pour établir un canal de communication visuelle de la lumière codé par couleur (7).

11. Le système (1) selon l'une des revendications 1 à 9, dans lequel la source de lumière (4) et le photodétecteur (6) sont adaptés pour établir un canal de communication visuelle de lumière modulé en intensité (7).

12. Le système (1) selon l'une des revendications 1 à 11 comprenant :
- un modulateur (23) adapté pour moduler la lumière avec les données et pour transférer en outre la lumière à la source de lumière (4) pour l'émission de la lumière modulée ;
- un démodulateur (24) adapté pour recevoir la lumière modulée du photodétecteur (6), et pour démoduler la lumière et extraire des données pour une communication ultérieure.

13. Le système (1) selon l'une des revendications 1 à 12, dans lequel le photodétecteur (6) est adapté pour détecter uniquement la lumière de couleur spécifique ou uniquement la lumière blanche.
